# EUROPEAN PATENT APPLICATION

(11) **EP 4 761 073 A1**
(43) Veröffentlichungstag der Anmeldung: **17.06.2026**
(21) Anmeldenummer: 23948045.2
(22) Anmeldetag: 10.08.2023
(51) Int. Cl.: H02K 5/20, H02K 9/19

(54) **ELEKTROMOTORANORDNUNG**

(71) Anmelder: Schaeffler Technologies AG & Co. KG, 91074 Herzogenaurach (DE)
(72) Erfinder: XIA, Jianyun, Shanghai 201804 (CN)
(74) Vertreter: Schaeffler Technologies
(86) Internationale Anmeldenummer: PCT/CN2023/112182
(87) Internationale Veröffentlichungsnummer: WO 2025/030470

(57) **Zusammenfassung**

Die vorliegende Erfindung betrifft eine Elektromotoranordnung. Die Elektromotoranordnung umfasst ein Gehäuse, einen Statorkern, eine Spulenwicklung und eine Dichtungsabdeckung, wobei der Statorkern, die Spulenwicklung und die Dichtungsabdeckung in dem Gehäuse montiert sind; die Spulenwicklung um den Statorkern gewickelt ist und axial aus dem axialen Ende des Statorkerns hervorsteht; und die Dichtungsabdeckung am axialen Ende des Statorkerns montiert ist, um zusammen mit dem Statorkern einen abgedichteten Hohlraum zum Einkapseln der Spulenwicklung zu bilden, wobei die Dichtungsabdeckung einen Einlass in den abgedichteten Hohlraum umfasst, der die Dichtungsabdeckung durchdringt, sodass eine Kühlflüssigkeit in den abgedichteten Hohlraum fließen kann. Die Elektromotoranordnung umfasst ferner einen Führungskanal, der zwischen der axialen Endfläche der Dichtungsabdeckung und dem Gehäuse gebildet ist und mit dem Einlass in den abgedichteten Hohlraum in Verbindung steht; wobei die dem abgedichteten Hohlraum zugeführte Kühlflüssigkeit durch den Führungskanal treten kann, um zu dem Einlass in den abgedichteten Hohlraum zu fließen und in den abgedichteten Hohlraum einzutreten. Die Elektromotoranordnung der vorliegenden Erfindung weist einen verbesserten Einleitungspfad für eine Kühlflüssigkeit auf.

## Beschreibung

### Technisches Gebiet

Die vorliegende Erfindung betrifft das technische Gebiet der Elektromotoren. Die vorliegende Erfindung betrifft insbesondere eine verbesserte Elektromotoranordnung.

### Technischer Hintergrund

Im Zuge der Entwicklung neuer Energietechnologien werden Elektromotoren zunehmend als Antriebsvorrichtungen eingesetzt. Bei Fahrzeugen mit alternativer Antriebstechnik (NEV bzw. New Energy Vehicles) sind beispielsweise Elektromotoren wichtige Energiequellen für den Antrieb der Fahrzeuge. Ein Elektromotor umfasst einen Statorteil und einen Rotorteil, wobei der Rotorteil in der Lage ist, sich unter der Einwirkung einer elektromagnetischen Kraft relativ zum Statorteil zu drehen, wodurch kinetische Energie erzeugt wird. Während des Betriebs des Elektromotors führt der elektrische Strom in einer Spulenwicklung zu einer erheblichen Erwärmung der Komponenten des Elektromotors, und es müssen Maßnahmen zur Kühlung vorgesehen werden, um die Wärme zu übertragen und abzuführen, damit die Komponenten des Elektromotors nicht durch eine zu hohe Temperatur beschädigt werden. Eine gängige Maßnahme zur Kühlung besteht darin, dass ein Gehäuse des Elektromotors mit einer Flüssigkeit, wie z. B. Motoröl, als Kühlflüssigkeit gefüllt wird, die im Gehäuse untergebrachten Elektromotorkomponenten (z. B. Stator und Rotor) in die Kühlflüssigkeit eingetaucht werden und die im Elektromotor zirkulierende Kühlflüssigkeit die von den Elektromotorkomponenten erzeugte Wärme vom Elektromotor abführt.

In der Regel wird die Kühlflüssigkeit von einer Ölpumpe zu einem Wärmetauscher gefördert und nach der Kühlung über den Wärmetauscher der Statorkomponente des Elektromotors zugeführt, um den Stator zu kühlen. Die vom Wärmetauscher zugeführte Kühlflüssigkeit fließt in einen abgedichteten Hohlraum des Stators von einem Einlass an einer Dichtungsabdeckung an einem Ende und fließt dann aus dem abgedichteten Hohlraum des Stators aus einem Auslass an der Dichtungsabdeckung am anderen Ende heraus. Im Stand der Technik ist einerseits die Position des Einlasses zum Einleiten der Kühlflüssigkeit in den abgedichteten Hohlraum nicht flexibel und befindet sich in der Regel an einem oberen Abschnitt der Dichtungsabdeckung, wodurch sich leicht Luftbläschen im abgedichteten Hohlraum bilden können; andererseits müssen die Dichtungsabdeckung und ein Statorkern abgedichtet werden, um ein Austreten der Kühlflüssigkeit zu verhindern, was die Montage erschwert.

### Kurzdarstellung der Erfindung

Daher besteht die Aufgabe der vorliegenden Erfindung darin, eine Elektromotoranordnung mit einem verbesserten Einleitungspfad für eine Kühlflüssigkeit bereitzustellen.

Die vorgenannte Aufgabe wird durch eine Elektromotoranordnung gemäß der vorliegenden Erfindung gelöst. Die Elektromotoranordnung umfasst ein Gehäuse, einen Statorkern, eine Spulenwicklung und Dichtungsabdeckungen, wobei der Statorkern, die Spulenwicklung und die Dichtungsabdeckungen in dem Gehäuse montiert sind, die Spulenwicklung um den Statorkern gewickelt ist und axial aus den axialen Enden des Statorkerns hervorsteht, die Dichtungsabdeckungen an den axialen Enden des Statorkerns montiert sind, um zusammen mit dem Statorkern abgedichtete Hohlräume zum Einkapseln der Spulenwicklung zu bilden, und wobei die Dichtungsabdeckungen Einlässe in die abgedichteten Hohlräume umfassen, die die Dichtungsabdeckungen durchdringen, sodass eine Kühlflüssigkeit in die abgedichteten Hohlräume fließen kann. Die Elektromotoranordnung umfasst ferner Führungskanäle, die zwischen axialen Endflächen der Dichtungsabdeckungen und dem Gehäuse gebildet sind und mit den Einlässen in die abgedichteten Hohlräume in Verbindung stehen und wobei die den abgedichteten Hohlräumen zugeführte Kühlflüssigkeit durch die Führungskanäle treten kann, um zu den Einlässen in die abgedichteten Hohlräume zu fließen und in die abgedichteten Hohlräume einzutreten. Die Führungskanäle können die Kühlflüssigkeit von einer geeigneten Position aus in die abgedichteten Hohlräume an den Innenseiten der Dichtungsabdeckungen einleiten und so eine Kühlwirkung in den abgedichteten Hohlräumen sicherstellen; und in der Zwischenzeit fließt die Kühlflüssigkeit in den Führungskanälen, die zwischen den axialen Endflächen der Dichtungsabdeckungen und dem Gehäuse gebildet sind, und kann einen Flüssigkeitsdruck in Richtung des Statorkerns auf die Dichtungsabdeckungen aufbringen, wodurch eine Abdichtung der Dichtungsabdeckungen gegenüber dem Statorkern erreicht wird.

Gemäß einer bevorzugten Ausführungsform der vorliegenden Erfindung können die Führungskanäle als ringförmige Kanäle gebildet sein, die die Mittelachsen der Dichtungsabdeckungen koaxial umgeben. Die ringförmigen Führungskanäle können einen gleichmäßig in Umfangsrichtung verteilten Flüssigkeitsdruck auf die Dichtungsabdeckungen aufbringen, so dass die Dichtungsabdeckungen besser am Statorkern anliegen und so eine gute Dichtungswirkung gewährleistet ist.

Gemäß einer weiteren bevorzugten Ausführungsform der vorliegenden Erfindung kann das Gehäuse Ringnuten umfassen, die auf die axialen Endflächen der Dichtungsabdeckungen gerichtet sind, und die axialen Endflächen der Dichtungsabdeckungen können die Ringnuten verschließen, um die Führungskanäle zu bilden. Das Aufnahmevolumen der Führungskanäle wird also durch die Nuten im Inneren des Gehäuses bereitgestellt.

Gemäß einer weiteren bevorzugten Ausführungsform der vorliegenden Erfindung können radial äußere Seitenbereiche der axialen Endflächen der Dichtungsabdeckungen erste ringförmige Abstufungen bilden, die sich in Richtung von den Ringnuten weg senken, das Gehäuse umfasst zweite ringförmige Abstufungen, die den ersten ringförmigen Abstufungen entsprechen und in Richtung der ersten ringförmigen Abstufungen hervorstehen, die ersten ringförmigen Abstufungen und die zweiten ringförmigen Abstufungen liegen entlang einer axialen Richtung aneinander an, und die Ringnuten sind in den zweiten ringförmigen Abstufungen gebildet. Die ringförmigen Abstufungen können das Zentrieren der Dichtungsabdeckungen und des Gehäuses bei der Montage erleichtern.

Gemäß einer weiteren bevorzugten Ausführungsform der vorliegenden Erfindung können die Einlässe in die abgedichteten Hohlräume in den ersten ringförmigen Abstufungen gebildet sein. Die Kühlflüssigkeit kann von den Führungskanälen über die Einlässe in die abgedichteten Hohlräume an den ersten ringförmigen Abstufungen in die abgedichteten Hohlräume fließen.

Gemäß einer weiteren bevorzugten Ausführungsform der vorliegenden Erfindung kann das Gehäuse Einlässe der Führungskanäle umfassen, die mit den Führungskanälen in Verbindung stehen, wobei die den abgedichteten Hohlräumen zugeführte Kühlflüssigkeit über die Einlässe der Führungskanäle in die Führungskanäle fließen kann und sich die Einlässe der Führungskanäle an den Innenwänden der Ringnuten befinden. Die Einlässe der Führungskanäle können die Führungskanäle mit einem im Gehäuse gebildeten Kanal verbinden, so dass die Kühlflüssigkeit, z. B. aus einem Wärmetauscher, in die Führungskanäle fließen kann.

Gemäß einer weiteren bevorzugten Ausführungsform der vorliegenden Erfindung kann eine Mittelachse des Statorkerns dazu verwendet werden, entlang einer horizontalen Richtung angeordnet zu werden, um zu ermöglichen, dass die Einlässe in die abgedichteten Hohlräume unterhalb einer horizontalen Ebene angeordnet werden können, die durch die Mittelachse verläuft. Vorzugsweise kann die Mittelachse des Statorkerns dazu verwendet werden, entlang der horizontalen Richtung angeordnet zu werden, um zu ermöglichen, dass die Einlässe in die abgedichteten Hohlräume an den unteren Abschnitten der Dichtungsabdeckungen angeordnet werden können. Dadurch kann die Kühlflüssigkeit während des Betriebs der Elektromotoranordnung aus den unteren Abschnitten der abgedichteten Hohlräume abfließen, wodurch die Bildung von Luftbläschen in den abgedichteten Hohlräumen verringert wird.

### Kurzbeschreibung der Zeichnungen

Die vorliegende Erfindung wird nachstehend in Verbindung mit den beigefügten Zeichnungen weiter beschrieben. Gleiche Bezugszeichen in den Zeichnungen werden verwendet, um Elemente mit gleichen Funktionen darzustellen. Es zeigt:
Figur 1 eine stereoskopische Ansicht einer Elektromotoranordnung gemäß einem Ausführungsbeispiel der vorliegenden Erfindung;
Figur 2 eine Schnittansicht einer Elektromotoranordnung gemäß einem Ausführungsbeispiel der vorliegenden Erfindung;
Figur 3 eine stereoskopische Ansicht einer Dichtungsabdeckung einer Elektromotoranordnung gemäß einem Ausführungsbeispiel der vorliegenden Erfindung; und
Figur 4 eine stereoskopische Ansicht eines Gehäuses einer Elektromotoranordnung gemäß einem Ausführungsbeispiel der vorliegenden Erfindung.

### Ausführliche Beschreibung von Ausführungsformen

Spezifische Ausführungsformen einer Elektromotoranordnung gemäß der vorliegenden Erfindung werden nachstehend in Verbindung mit den beigefügten Zeichnungen beschrieben. Die folgende detaillierte Beschreibung und die beigefügten Zeichnungen werden verwendet, um das Prinzip der vorliegenden Erfindung beispielhaft zu veranschaulichen. Die vorliegende Erfindung ist nicht auf die beschriebenen bevorzugten Ausführungsformen beschränkt, und der Schutzumfang der vorliegenden Erfindung ist durch die Ansprüche definiert.

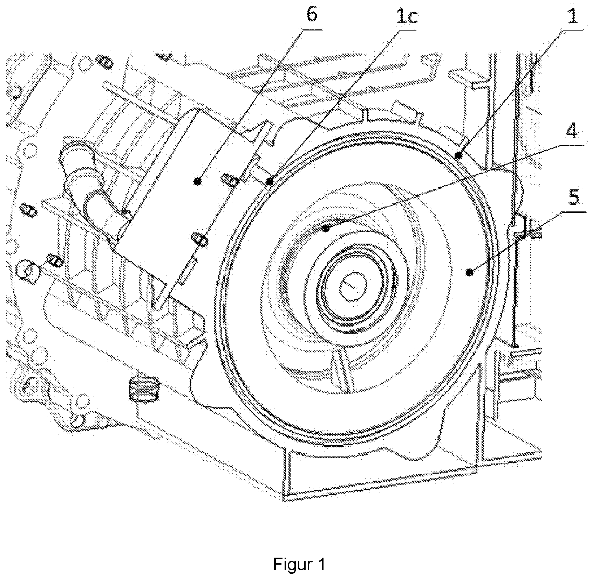

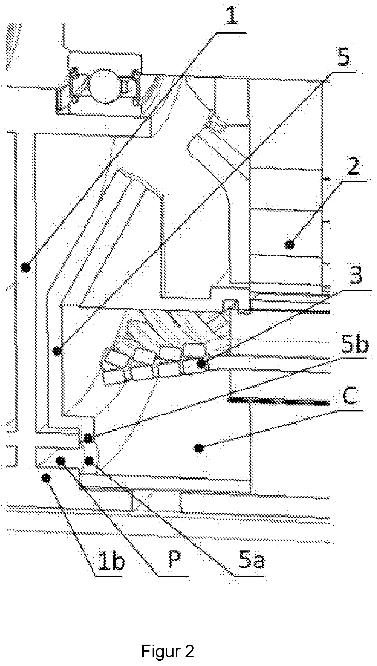

Gemäß einer Ausführungsform der vorliegenden Erfindung wird eine Elektromotoranordnung bereitgestellt. Bei der Elektromotoranordnung kann es sich z. B. um einen Antriebsmotor für ein Kraftfahrzeug oder um einen Elektromotor handeln, der Bewegungsenergie für andere Vorrichtungen liefert. Wie in Figur 1 und Figur 2 gezeigt, umfasst die Elektromotoranordnung im Wesentlichen ein Gehäuse 1, einen Statorteil, einen Rotor 4, Dichtungsabdeckungen 5 usw. Der Statorteil, der Rotor 4 und die Dichtungsabdeckungen 5 usw. sind im Inneren des Gehäuses 1 montiert. Der Rotor 4 ist koaxial an einer radial inneren Seite des Statorteils montiert und kann sich unter Einwirkung einer elektromagnetischen Kraft um eine Mittelachse relativ zum Statorteil drehen. Der Statorteil ist relativ zum Gehäuse 1 befestigt.

Der Statorteil umfasst im Wesentlichen einen Statorkern 2 und eine Spulenwicklung 3. Der Statorkern 2 ist zylinderförmig um die Mittelachse gebildet und weist einen axial durchbrochenen Hohlraum zur Montage des Rotors 4 auf. Der Statorkern 2 ist mit mehreren Durchgangslöchern gebildet, die axial durch ihn hindurchgeführt sind, und diese Durchgangslöcher sind in Abständen entlang einer Umfangsrichtung verteilt, wodurch Jochabschnitte zwischen den benachbarten Durchgangslöchern gebildet werden. Eine Spule der Spulenwicklung 3 durchläuft diese Durchgangslöcher und wird um die Jochabschnitte des Statorkerns 2 gewickelt. Die um den Statorkern 2 gewickelte Spulenwicklung 3 steht axial aus zwei axialen Enden des Statorkerns 2 hervor.

Die Elektromotoranordnung kann zwei im Wesentlichen identische Dichtungsabdeckungen 5 umfassen, und die beiden Dichtungsabdeckungen 5 werden jeweils an den beiden axialen Enden des Statorkerns 2 montiert, um die Spulenwicklung 3 einzukapseln. Jede Dichtungsabdeckung 5 steht in abgedichteter Passung mit einer entsprechenden axialen Endfläche des Statorkerns 2, um einen entsprechenden abgedichteten Hohlraum C zwischen der Dichtungsabdeckung und der axialen Endfläche des Statorkerns 2 zu bilden. Die beiden abgedichteten Hohlräume C, die sich an den beiden axialen Enden des Statorkerns 2 befinden, stehen über das Innere des Statorkerns 2 miteinander in Verbindung (insbesondere über die Durchgangslöcher, durch die die Spulenwicklung 3 verläuft). Jeder abgedichtete Hohlraum C wird durch die entsprechende axiale Endfläche des Statorkerns 2 zusammen mit der Dichtungsabdeckung 5 definiert, um einen Endabschnitt der Spulenwicklung 3 einzukapseln, der aus dem Statorkern 2 hervorsteht. Eine Kühlflüssigkeit kann zur Kühlung in einen Wärmetauscher 6 gefördert werden, z. B. durch eine Hydraulikpumpe und andere Vorrichtungen (nicht abgebildet). Dann fließt die Kühlflüssigkeit aus dem Wärmetauscher 6 über die Dichtungsabdeckung 5 an einem Ende des Statorkerns 2 in den entsprechenden abgedichteten Hohlraum C, fließt dann über das Innere des Statorkerns 2 in den abgedichteten Hohlraum C am anderen Ende und fließt schließlich über die Dichtungsabdeckung 5 am anderen Ende ab. Unter dem Antrieb der Hydraulikpumpe kann die Kühlflüssigkeit über den oben genannten Pfad zirkulierend durch das Innere des Statorkerns 2 strömen, wodurch die im Statorteil erzeugte Wärme übertragen und abgeleitet wird.

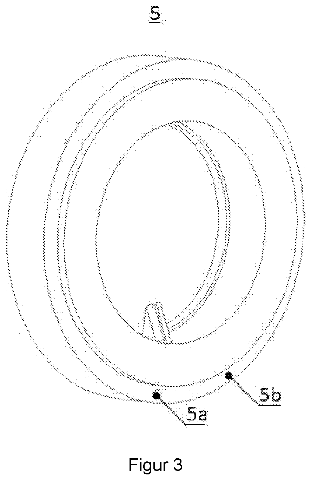

Figur 3 zeigt eine stereoskopische Ansicht der Dichtungsabdeckung 5 der Elektromotoranordnung. Wie in Figur 3 gezeigt, sind die Dichtungsabdeckungen 5 als allgemein ringförmige zylindrische Komponenten gebildet, die zu einem axialen Ende hin offene ringförmige Hohlräume aufweisen. Wenn die Dichtungsabdeckungen 5 an den axialen Enden des Statorkerns 2 montiert sind, sind die Dichtungsabdeckungen 5 koaxial zum Statorkern 2 angeordnet und liegen an den axialen Endflächen des Statorkerns 2 an den offenen Enden der ringförmigen Hohlräume an, wodurch die abgedichteten Hohlräume C zusammen mit dem Statorkern 2 definiert werden. Der Abschnitt der Spulenwicklung 3, der aus dem Statorkern 2 hervorsteht, wird in den Volumina der abgedichteten Hohlräume C aufgenommen, die von den ringförmigen Hohlräumen der Dichtungsabdeckungen 5 bereitgestellt werden. Die geschlossenen Enden der Dichtungsabdeckungen 5 liegen den offenen Enden gegenüber, die in axialer Richtung auf den Statorkern 2 gerichtet sind, so dass axiale Endflächen bereitgestellt werden, die im Wesentlichen senkrecht zur Mittelachse verlaufen und dem Gehäuse 1 zugewandt sind.

Figur 2 zeigt eine Schnittansicht eines Endes der Elektromotoranordnung, durch welches die Kühlflüssigkeit in den Statorkern 2 fließen kann. Wie in Figur 2 gezeigt, sind die Dichtungsabdeckungen 5, die als Einlassenden für die Kühlflüssigkeit dienen, mit Einlässen in die abgedichteten Hohlräume 5a gebildet, die die Dichtungsabdeckungen 5 durchdringen und so das Einströmen der Kühlflüssigkeit in die entsprechenden abgedichteten Hohlräume C ermöglichen. Zwischen den auf das Gehäuse 1 gerichteten axialen Endflächen der Dichtungsabdeckungen 5 und dem Gehäuse 1 sind Führungskanäle P gebildet. Die Führungskanäle P stehen mit den Einlässen in die abgedichteten Hohlräume 5a in Verbindung, so dass z. B. die Kühlflüssigkeit aus dem Wärmetauscher 6 zu den Einlässen in die abgedichteten Hohlräume 5a fließen und über die Führungskanäle P in die abgedichteten Hohlräume C eintreten kann.

Die Führungskanäle P können die Kühlflüssigkeit von einer geeigneten Position aus in die abgedichteten Hohlräume C an den Innenseiten der Dichtungsabdeckungen 5 einleiten und so eine Kühlwirkung in den abgedichteten Hohlräumen C sicherstellen. Die Räume der Führungskanäle P werden durch die axialen Endflächen der Dichtungsabdeckungen 5, die auf das Gehäuse 1 gerichtet sind, zusammen mit dem Gehäuse 1 definiert. Die Kühlflüssigkeit fließt zwischen den axialen Endflächen der Dichtungsabdeckungen 5 und dem Gehäuse 1 und kann auf den Dichtungsabdeckungen 5 einen Flüssigkeitsdruck in Richtung des Statorkerns 2 aufbringen, so dass die anderen axialen Enden der Dichtungsabdeckungen 5 stabil am Statorkern 2 entlang einer axialen Richtung anliegen, wodurch eine Abdichtung der Dichtungsabdeckungen 5 gegenüber dem Statorkern 2 erreicht wird. Daher ist es nicht erforderlich, zusätzliche Dichtungselemente zwischen den Dichtungsabdeckungen 5 und dem Statorkern 2 anzuordnen.

Wie in Figur 1 gezeigt, ist eine Mittelachse des Statorkerns 2 im Montagezustand in der Regel in horizontaler Richtung angeordnet. Um zu diesem Zeitpunkt eine vollständige Kühlung des Statorkerns 2 durch die Kühlflüssigkeit zu ermöglichen, befinden sich die Einlässe in die abgedichteten Hohlräume 5a vorzugsweise unterhalb einer horizontalen Ebene, die durch die Mittelachse verläuft. Insbesondere können sich die Einlässe in die abgedichteten Hohlräume 5a vorzugsweise in den unteren Abschnitten der Dichtungsabdeckungen 5 befinden. Dadurch kann die Kühlflüssigkeit während des Betriebs der Elektromotoranordnung aus den unteren Abschnitten der abgedichteten Hohlräume C abfließen, wodurch die Bildung von Luftbläschen in den abgedichteten Hohlräumen verringert wird.

Vorzugsweise können die Führungskanäle P als ringförmige Kanäle gebildet sein, die die Mittelachsen der Dichtungsabdeckungen 5 koaxial umgeben. Die ringförmigen Führungskanäle P können einen gleichmäßig in Umfangsrichtung verteilten Flüssigkeitsdruck auf die Dichtungsabdeckungen 5 aufbringen, so dass die Dichtungsabdeckungen 5 besser am Statorkern 2 anliegen und so eine gute Dichtungswirkung gewährleistet ist. Die Volumina dieser ringförmigen Kanäle können entweder durch die Dichtungsabdeckungen 5 oder das Gehäuse 1 oder durch beide Komponenten bereitgestellt werden.

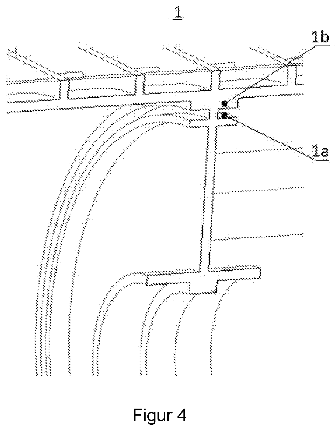

Beispielsweise sind in den in Figur 1 bis Figur 4 gezeigten Ausführungsformen die Volumina der ringförmigen Führungskanäle P durch im Gehäuse 1 gebildete Ringnuten 1a bereitgestellt. Die Ringnuten 1a sind koaxial zu den Dichtungsabdeckungen 5 angeordnet und sind zu den axialen Endflächen der Dichtungsabdeckungen 5 hin offen. Bei der Montage der Dichtungsabdeckungen 5 und des Gehäuses 1 stoßen die axialen Endflächen der Dichtungsabdeckungen 5 und die offenen Enden der Ringnuten 1a in axialer Richtung aneinander, wodurch die Ringnuten 1a verschlossen werden. Daher sind die ringförmigen Führungskanäle P zwischen den Dichtungsabdeckungen 5 und dem Gehäuse 1 gebildet.

In einer bevorzugten Ausführungsform können radial äußere Seitenbereiche der axialen Endflächen der Dichtungsabdeckungen 5 erste ringförmige Abstufungen 5b bilden, die sich in Richtung von den Ringnuten 1a weg senken. Die ersten ringförmigen Abstufungen 5b sind koaxial zu den Dichtungsabdeckungen 5 angeordnet. Dementsprechend umfasst das Gehäuse 1 zweite ringförmige Abstufungen 1b, die den ersten ringförmigen Abstufungen 5b entsprechen und in Richtung der ersten ringförmigen Abstufungen 5b hervorstehen, und die Ringnuten 1a sind in den zweiten ringförmigen Abstufungen 1b gebildet. Bei der Montage der Dichtungsabdeckungen 5 und des Gehäuses 1 sind die ersten ringförmigen Abstufungen 5b und die zweiten ringförmigen Abstufungen 1b koaxial angeordnet und stoßen in axialer Richtung aneinander, wodurch die Ringnuten 1a geschlossen werden und die Führungskanäle P bereitstellen. Solche ringförmigen Abstufungen können die Zentrierung der Dichtungsabdeckungen 5 und des Gehäuses 1 bei der Montage erleichtern.

Die Einlässe in die abgedichteten Hohlräume 5a können in den axialen Endflächen der Dichtungsabdeckungen 5 gebildet sein, die auf die Ringnuten 1a gerichtet sind, und können insbesondere in den ersten ringförmigen Abstufungen 5b gebildet sein. Bei der Montage der Dichtungsabdeckungen 5 und des Gehäuses 1 überlappen sich die radialen Positionen der Einlässe in die abgedichteten Hohlräume 5a und der Ringnuten 1a, so dass die Kühlflüssigkeit aus den Führungskanälen P über die Einlässe in die abgedichteten Hohlräume 5a in die abgedichteten Hohlräume C fließen kann.

Wie in Figur 1 gezeigt, können im Gehäuse 1 Einlässe der Führungskanäle 1c für die Zufuhr der Kühlflüssigkeit zu den Führungskanälen P (z. B. vom Wärmetauscher 6) gebildet sein. Die Einlässe der Führungskanäle 1c verbinden die Führungskanäle P mit einem Kanal, der mit einer Kühlflüssigkeitsquelle (z. B. dem Wärmetauscher 6) im Gehäuse 1 verbunden ist. Die Einlässe der Führungskanäle 1c können sich an den Innenwänden (z. B. einer Endwand und einer Seitenwand) der Ringnuten 1a befinden. Die Positionen der Einlässe der Führungskanäle 1c können entsprechend der Position der Kühlflüssigkeitsquelle und der Struktur des Gehäuses 1 gewählt werden.

Bei der erfindungsgemäßen Elektromotoranordnung wird die Kühlflüssigkeit über die zwischen den Dichtungsabdeckungen und dem Gehäuse gebildeten Führungskanäle in die abgedichteten Hohlräume in den Dichtungsabdeckungen eingeleitet, so dass die Position, an der die Kühlflüssigkeit in die abgedichteten Hohlräume eingeleitet wird, je nach Bedarf flexibel gewählt werden kann. Insbesondere kann die Kühlflüssigkeit aus Wärmetauschern an verschiedenen Positionen von den unteren Abschnitten der Dichtungsabdeckungen in die abgedichteten Hohlräume eingeleitet werden, wodurch die Bildung von Luftbläschen verringert wird. Gleichzeitig kann die Kühlflüssigkeit in den Führungskanälen einen Flüssigkeitsdruck in Richtung des Statorkerns auf die Dichtungsabdeckungen aufbringen, wodurch eine Abdichtung der Dichtungsabdeckungen gegenüber dem Statorkern erreicht wird. Dadurch kann auf ein Dichtungselement verzichtet werden, was den Aufbau und die Montage der Elektromotoranordnung vereinfacht.

Obwohl in der vorstehenden Beschreibung mögliche Ausführungsformen veranschaulichend beschrieben wurden, versteht es sich, dass es durch Kombinationen aller bekannten technischen Merkmale und Implementierungen sowie jener, die für den Fachmann leicht ersichtlich sind, noch eine große Zahl von Ausführungsvarianten gibt. Außerdem versteht es sich auch, dass die beispielhaften Umsetzungen lediglich als Beispiele gedacht sind, und solche Ausführungsformen den Schutzumfang, die Anmeldung und den Aufbau der vorliegenden Erfindung in keiner Weise einschränken sollen. Die vorstehende Beschreibung soll dem Fachmann vielmehr eine technische Anleitung zur Umsetzung mindestens einer beispielhaften Implementierung an die Hand geben, an der verschiedene Änderungen, insbesondere Änderungen der Funktionen und Konstruktionen der Komponenten, vorgenommen werden können, sofern diese nicht vom Schutzumfang der Ansprüche abweichen.

### Liste der Bezugszeichen

- 1: Gehäuse
- 1a: Ringnut
- 1b: Zweite ringförmige Abstufung
- 1c: Einlass des Führungskanals
- 2: Statorkern
- 3: Spulenwicklung
- 4: Rotor
- 5: Dichtungsabdeckung
- 5a: Einlass in den abgedichteten Hohlraum
- 5b: Erste ringförmige Abstufung
- 6: Wärmetauscher
- C: Abgedichteter Hohlraum
- P: Führungskanal

## Patentansprüche

1. Elektromotoranordnung, umfassend ein Gehäuse (1), einen Statorkern (2), eine Spulenwicklung (3) und Dichtungsabdeckungen (5), wobei der Statorkern (2), die Spulenwicklung (3) und die Dichtungsabdeckungen (5) in dem Gehäuse (1) montiert sind, die Spulenwicklung (3) um den Statorkern (2) gewickelt ist und axial aus den axialen Enden des Statorkerns (2) hervorstehen, die Dichtungsabdeckungen (5) an den axialen Enden des Statorkerns (2) montiert sind, um zusammen mit dem Statorkern (2) abgedichtete Hohlräume (C) zum Einkapseln der Spulenwicklung (3) zu bilden, und wobei die Dichtungsabdeckungen (5) Einlässe in die abgedichteten Hohlräume (5a) umfassen, die die Dichtungsabdeckungen (5) durchdringen, sodass eine Kühlflüssigkeit in die abgedichteten Hohlräume (C) fließen kann,
wobei
die Elektromotoranordnung ferner einen Führungskanal (P) umfasst, der zwischen axialen Endflächen der Dichtungsabdeckungen (5) und dem Gehäuse (1) gebildet ist und mit den Einlässen in die abgedichteten Hohlräume (5a) in Verbindung steht; und wobei die den abgedichteten Hohlräumen (C) zugeführte Kühlflüssigkeit durch den Führungskanal (P) treten kann, um zu den Einlässen in die abgedichteten Hohlräume (5a) zu fließen und in die abgedichteten Hohlräume (C) einzutreten.

2. Elektromotoranordnung nach Anspruch 1, wobei der Führungskanal (P) als ringförmiger Kanal gebildet ist, der die Mittelachsen der Dichtungsabdeckungen (5) koaxial umgibt.

3. Elektromotoranordnung nach Anspruch 2, wobei das Gehäuse (1) eine Ringnut (1a) umfasst, die auf die axialen Endflächen der Dichtungsabdeckungen (5) gerichtet ist, und die axialen Endflächen der Dichtungsabdeckungen (5) die Ringnut (1a) verschließen und dadurch den Führungskanal (P) bilden.

4. Elektromotoranordnung nach Anspruch 3, wobei radial äußere Seitenbereiche der axialen Endflächen der Dichtungsabdeckungen (5) erste ringförmige Abstufungen (5b) bilden, die sich in Richtung von der Ringnut (1a) weg senken, das Gehäuse (1) zweite ringförmige Abstufungen (1b) umfasst, die den ersten ringförmigen Abstufungen (5b) entsprechen und in Richtung der ersten ringförmigen Abstufungen (5b) hervorstehen, die ersten ringförmigen Abstufungen (5b) und die zweiten ringförmigen Abstufungen (1b) entlang einer axialen Richtung aneinander anliegen, und die Ringnuten (1a) in den zweiten ringförmigen Abstufungen (1b) gebildet sind.

5. Elektromotoranordnung nach Anspruch 4, wobei die Einlässe in die abgedichteten Hohlräume (5a) in den ersten ringförmigen Abstufungen (5b) gebildet sind.

6. Elektromotoranordnung nach Anspruch 3, wobei das Gehäuse (1) einen Einlass des Führungskanals (1c) umfasst, der mit dem Führungskanal (P) in Verbindung steht, die den abgedichteten Hohlräumen (C) zugeführte Kühlflüssigkeit über den Einlass des Führungskanals (1c) in den Führungskanal (P) fließen kann und sich der Einlass des Führungskanals (1c) an einer Innenwand der Ringnut (1a) befindet.

7. Elektromotoranordnung nach einem der Ansprüche 1 bis 6, wobei eine Mittelachse des Statorkerns (2) dazu verwendet wird, entlang einer horizontalen Richtung angeordnet zu werden, um zu ermöglichen, dass die Einlässe in die abgedichteten Hohlräume (5a) unterhalb einer horizontalen Ebene angeordnet werden können, die durch die Mittelachse verläuft.

8. Elektromotoranordnung nach Anspruch 7, wobei die Mittelachse des Statorkerns (2) dazu verwendet wird, entlang der horizontalen Richtung angeordnet zu werden, um zu ermöglichen, dass die Einlässe in die abgedichteten Hohlräume (5a) an den unteren Abschnitten der Dichtungsabdeckungen (5) angeordnet werden können.
